# EUROPEAN PATENT APPLICATION

(11) **EP 4 567 711 A1**
(43) Date of publication of application: **11.06.2025**
(21) Application number: 23849884.4
(22) Date of filing: 18.07.2023
(51) Int. Cl.: G06Q 50/16

(54) **METHOD FOR EVALUATING VALUE OF FACILITY PROVIDED IN BUILDING, FACILITY EVALUATION DEVICE, AND COMPUTER-READABLE RECORDING MEDIUM**

(30) Priority: 01.08.2022 JP 2022122921
(71) Applicant: Global Gates Co., Ltd., Tokyo 103-0007 (JP)
(72) Inventor: UMEMURA Masayuki, Tokyo 103-0007 (JP); NATSUYAMA Jun, Tokyo 103-0007 (JP)
(74) Representative: Betten & Resch
(86) International application number: PCT/JP2023/026301
(87) International publication number: WO 2024/029327

(57) **Abstract**

A service-record information item about one maintenance-management service, the service-record information item being stored in a service record DB (24), includes first information about a date on which the one maintenance-management service was provided. An evaluation-criterion information item about one facility, the evaluation-criterion information item being stored in a facility evaluation DB (25), includes a value determination rule according to which an evaluation value that indicates a value of the one facility is determined. According to the value determination rule for the one facility, the evaluation value of the one facility is determined on the basis of an at least one of a lapse of time since provision of an at least one maintenance-management service that is possible to provide to the one facility, the number of times of the provision, and a frequency of the provision. A facility evaluation apparatus (1) acquires the evaluation value of each of the one or more facilities provided in the specific building by applying the first information of the one or more maintenance-management services to the value determination rule in evaluation criterion information.

## Description

### Technical Field

The present invention relates to a method for evaluating values of facilities provided in buildings, a facility evaluation apparatus, and a computer-readable recording medium.

### Background Art

In general, in real estate appraisal, economic values of land and buildings are evaluated. Patent Document cited below discloses an apparatus that mainly evaluates prices of land and buildings as prices of real estate properties.

### Citation List

### Patent Literature

[PTL 1] Japanese Patent Application Laid-open No. 2019-192081

### Summary of Invention

### Technical Problem

Facilities (such as elevators, an electrical facility, and an air-conditioning facility) provided in relatively large buildings such as hotels, office buildings, and apartment buildings are also large. Thus, when evaluating values of real estate, it is desired to fairly evaluate values of not only the land and the buildings, but also those of the facilities. However, in general, in real estate appraisal, while the land and the buildings are evaluated, the facilities are not evaluated.

For example, it can be said that facilities that have been recently repaired and do not require repairs or replacement for the time being have higher economic values than those of facilities that are aging and require immediate repairs or replacement. In other words, conditions of facilities vary depending on past results of maintenance management services (such as repairs, part replacement, and inspection), and values of the facilities also vary depending on the conditions of the facilities. Related-art real-estate valuation methods such as that disclosed in Patent Literature cited above are used mainly to evaluate prices of the land and the buildings, and are not applicable to the evaluation of the values of the facilities, the values being possible to vary depending on the past results of the maintenance management services.

The present invention has been made in view of such circumstances, and an object thereof is to provide a method, a facility evaluation apparatus, and a program that enable evaluation of values of facilities in buildings, the values being possible to vary depending on past results of maintenance management services, and to provide a computer-readable recording medium that records the program.

### Solution to Problem

According to a first aspect of the present invention, there is provided a method that a facility evaluation apparatus which evaluates values of facilities provided in buildings carries out,
the facility evaluation apparatus being capable of making access to one or more storage devices,
the one or more storage devices storing
   service record information about records of one or more maintenance-management services that have been provided to each of one or more facilities among the facilities, the one or more facilities being provided in a specific building among the buildings, and
   evaluation criterion information about evaluation criteria for the values, the evaluation criteria having been set respectively for the facilities in advance,
the service record information including a service-record information item about one maintenance-management service of the one or more maintenance-management services, the service-record information item including first information about a date on which the one maintenance-management service was provided,
the evaluation criterion information including an evaluation-criterion information item about one facility of the facilities, the evaluation-criterion information item including a value determination rule according to which an evaluation value that indicates a value of the one facility among the values is determined,
according to the value determination rule for the one facility, the evaluation value of the one facility being determined on the basis of an at least one of
   a lapse of time since the provision of an at least one maintenance-management service of the one or more maintenance-management services, the at least one maintenance-management service being possible to provide to the one facility,
   the number of times of the provision, and
   a frequency of the provision,
the method including a first step of acquiring, by the facility evaluation apparatus, the evaluation value of each of the one or more facilities provided in the specific building by applying the first information included in the service-record information item corresponding to a corresponding one of the one or more maintenance-management services to the value determination rule that is included in the evaluation criterion information.

Preferably, the service record information includes at least a subset of service record information that includes second information about conditions of the facilities, the conditions having been updated through the provision of the one or more maintenance-management services
the value determination rule includes a subset of value determination rules according to which the evaluation value of the one facility is determined
   on the basis of an at least one of
      the lapse of time since the provision of the at least one maintenance-management service of the one or more maintenance-management services, the at least one maintenance-management service being possible to provide to the one facility,
      the number of times of the provision, and
      the frequency of the provision, and
   on the basis of a condition of the one facility, the condition having been updated through the at least one maintenance-management service that is possible to provide to the one facility, and
the first step includes acquiring the evaluation value of each of at least a subset of facilities provided in the specific building among the facilities by applying the first information and the second information that are included in the service record information to the value determination rule that is included in the evaluation criterion information.

Preferably, the subset of value determination rules include
a first rule according to which an operational period during which the one facility is estimated to be operational is determined
   on the basis of the at least one of
      the lapse of time since the provision of the at least one maintenance-management service of the one or more maintenance-management services, the at least one maintenance-management service being possible to provide to the one facility,
      the number of times of the provision, and
      the frequency of the provision, and
   on the basis of the condition of the one facility, the condition having been updated through the at least one maintenance-management service that is possible to provide to the one facility,
a second rule according to which the evaluation value of the one facility is determined on the basis of the operational period that has been determined with regard to the one facility, and
the first step includes
   acquiring the operational period of each of at least the subset of facilities provided in the specific building by applying the first information and the second information that are included in the service record information to the first rule that is included in the evaluation criterion information, and
   acquiring the evaluation value of each of at least the subset of facilities provided in the specific building by applying the acquired operational period to the second rule that is included in the evaluation criterion information.

Preferably, the second information includes at least a subset of second information that is any of
deterioration degree information that indicates deterioration degrees of the facilities, the deterioration degrees having been revealed through inspection services,
repair information about details of repairs that have been made to the facilities through repair services, and
replaced part information about parts of the facilities, the parts having been replaced through part replacement services,
the first rule includes at least a subset of first rules that include an at least one of
a rule according to which, in accordance with the deterioration degree information, the operational period is set to be shorter as a corresponding one of the deterioration degrees of a corresponding one of the facilities becomes higher,
a rule according to which, in accordance with the repair information, the operational period is set to be shorter as the number of times of the repairs becomes smaller and/or as the number of elapsed days since a latest repair becomes larger, and
a rule according to which, in accordance with the replaced part information, the operational period is set to be shorter as the number of times of the part replacement becomes smaller and/or as the number of elapsed days since latest part replacement becomes larger, and
the first step includes an at least one of
acquiring the operational period of each of at least the subset of facilities provided in the specific building, the operational period becoming shorter as a corresponding one of the deterioration degrees becomes higher, by applying the deterioration degree information and the first information that are included in the service record information to the first rule that is included in the evaluation criterion information,
acquiring the operational period of each of at least the subset of facilities provided in the specific building, the operational period becoming shorter as the number of times of the repairs becomes smaller and/or as the number of the elapsed days since the latest repair becomes larger, by applying the repair information and the first information that are included in the service record information to the first rule that is included in the evaluation criterion information, and
acquiring the operational period of each of at least the subset of facilities provided in the specific building, the operational period becoming shorter as the number of times of the part replacement becomes smaller and/or as the number of the elapsed days since the latest part replacement becomes larger, by applying the replaced part information and the first information that are included in the service record information to the first rule that is included in the evaluation criterion information.

Preferably, the one or more storage devices store part information about parts of the facilities, the parts being possible to replace through the part replacement services,
the part information includes availability information that indicates whether or not the parts are available,
at least the subset of first rules include a rule according to which, in a case where the parts include a part that is indicated to be unavailable by the availability information, an upper limit on the operational period is set in accordance with an average part lifespan of the part and a use-start time of the part, and
the first step includes acquiring, in the case where the parts include the part that is indicated to be unavailable by the availability information included in the part information, the operational period of each of at least the subset of facilities provided in the specific building, the operational period being shorter than the upper limit in accordance with the average part lifespan of the part and the use-start time of the part.

Preferably, the second rule includes at least a subset of second rules that include a rule according to which the evaluation value in accordance with a proportion of the operational period that has been determined with regard to the one facility relative to an average facility lifespan of the one facility is determined on the basis of the operational period that has been determined with regard to the one facility, and
the first step includes acquiring the evaluation value in accordance with the proportion of the operational period relative to the average facility lifespan by applying the operational period to the second rule, the operational period having been acquired with regard to each of at least the subset of facilities provided in the specific building.

Preferably, at least the subset of second rules include a rule according to which the evaluation value in accordance with the proportion of the operational period that has been determined with regard to the one facility relative to the average facility lifespan of the one facility and with a facility installation cost required for installation of the one facility is determined on the basis of the operational period that has been determined with regard to the one facility, and
the first step includes acquiring the evaluation value in accordance with the proportion of the operational period relative to the average facility lifespan and with the facility installation cost by applying the operational period to the second rule, the operational period having been acquired with regard to each of at least the subset of facilities provided in the specific building.

Preferably, at least the subset of second rules include a rule according to which the evaluation value in accordance with the proportion of the operational period that has been determined with regard to the one facility relative to the average facility lifespan of the one facility, with the facility installation cost required for the installation of the one facility, and with a maintenance management cost required for maintenance management of the one facility is determined on the basis of the operational period that has been determined with regard to the one facility, and
the first step includes acquiring the evaluation value in accordance with the proportion of the operational period relative to the average facility lifespan, with the facility installation cost, and with the maintenance management cost by applying the operational period to the second rule, the operational period having been acquired with regard to each of at least the subset of facilities provided in the specific building.

Preferably, the method according to the first aspect further includes a second step of acquiring a comprehensive evaluation value that indicates the values of all the one or more facilities provided in the specific building on the basis of the evaluation value acquired with regard to each of the one or more facilities provided in the specific building.

According to a second aspect of the present invention, there is provided a facility evaluation apparatus that evaluates values of facilities provided in buildings, the facility evaluation apparatus including:
a processing unit; and
a storage unit that stores a command which the processing unit executes,
the facility evaluation apparatus being capable of making access to one or more storage devices,
the one or more storage devices storing
   service record information about records of one or more maintenance-management services that have been provided to each of one or more facilities among the facilities, the one or more facilities being provided in a specific building among the buildings, and
   evaluation criterion information about evaluation criteria for the values, the evaluation criteria having been set respectively for the facilities in advance,
the service record information including a service-record information item about one maintenance-management service of the one or more maintenance-management services, the service-record information item including first information about a date on which the one maintenance-management service was provided,
the evaluation criterion information including an evaluation-criterion information item about one facility of the facilities, the evaluation-criterion information item including a value determination rule according to which an evaluation value that indicates a value of the one facility among the values is determined,
according to the value determination rule for the one facility, the evaluation value of the one facility being determined on the basis of an at least one of
   a lapse of time since the provision of an at least one maintenance-management service of the one or more maintenance-management services, the at least one maintenance-management service being possible to provide to the one facility,
   the number of times of the provision, and
   a frequency of the provision,
a process that the processing unit executes in accordance with the command including the steps by the method according to the first aspect.

According to a third aspect of the present invention, there is provided a program including a command that can be executed by a facility evaluation apparatus which evaluates values of facilities provided in buildings,
the facility evaluation apparatus being capable of making access to one or more storage devices,
the one or more storage devices storing
   service record information about records of one or more maintenance-management services that have been provided to each of one or more facilities among the facilities, the one or more facilities being provided in a specific building among the buildings, and
   evaluation criterion information about evaluation criteria for the values, the evaluation criteria having been set respectively for the facilities in advance,
the service record information including a service-record information item about one maintenance-management service of the one or more maintenance-management services, the service-record information item including first information about a date on which the one maintenance-management service was provided,
the evaluation criterion information including an evaluation-criterion information item about one facility of the facilities, the evaluation-criterion information item including a value determination rule according to which an evaluation value that indicates a value of the one facility among the values is determined,
according to the value determination rule for the one facility, the evaluation value of the one facility being determined on the basis of an at least one of
   a lapse of time since the provision of an at least one maintenance-management service of the one or more maintenance-management services, the at least one maintenance-management service being possible to provide to the one facility,
   the number of times of the provision, and
   a frequency of the provision,
a process that the processing unit executes in accordance with the command including the steps by the method according to the first aspect.

According to a fourth aspect of the present invention, there is provided a computer-readable recording medium that records the program according to the third aspect. Advantageous Effects of Invention

According to the present invention, it is possible to provide the method, the facility evaluation apparatus, and the program that enable evaluation of values of facilities in buildings, the values being possible to vary depending on past results of maintenance management services, and to provide the computer-readable recording medium that records the program.

### Brief Description of Drawings

[FIG. 1] FIG. 1 is a diagram showing an example of a configuration of a system according to an embodiment of the present invention.
[FIG. 2] FIG. 2A are FIG. 2B are explanatory diagrams respectively showing information items that are included in facility management information and maintenance-management-service information.
[FIG. 3] FIG. 3A, FIG. 3B, and FIG. 3C are explanatory diagrams respectively showing information items that are included in part information, service record information, and evaluation criterion information.
[FIG. 4] FIG. 4 is an explanatory flowchart showing an example of a facility evaluation method according to the embodiment.
[FIG. 5] FIG. 5 is an image of an example of a screen that displays evaluation results.
[FIG. 6] FIG. 6 is an explanatory flowchart showing an example of a process of acquiring an evaluation value.
[FIG. 7] FIG. 7 is an explanatory flowchart showing a modification of the process of acquiring the evaluation value.

### Description of Embodiments

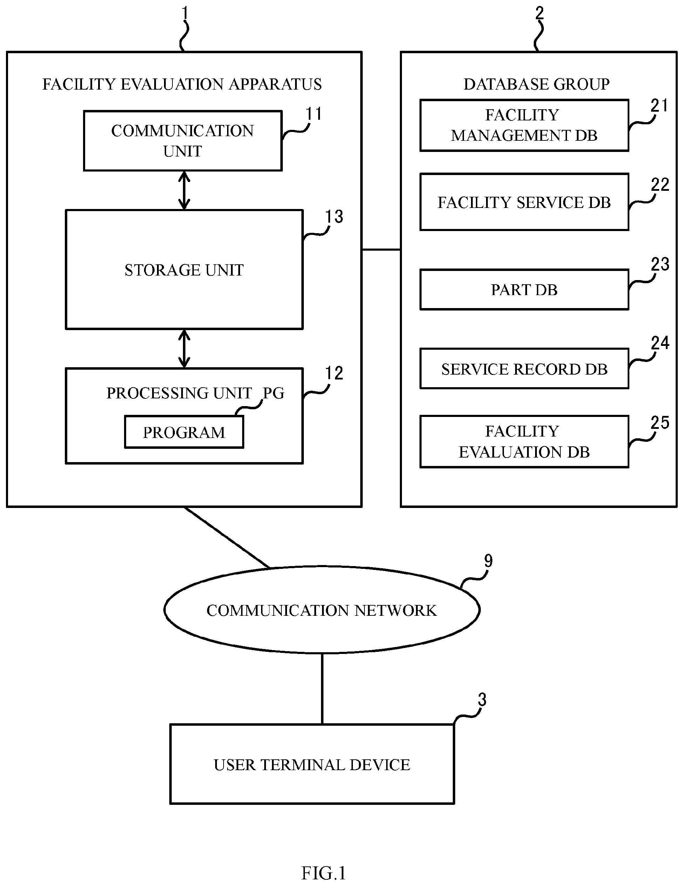

FIG. 1 is a diagram showing an example of a configuration of a system according to this embodiment. The system shown as the example in FIG. 1 includes a facility evaluation apparatus 1 and a user terminal device 3 that are communicable with each other via a communication network 9 such as the Internet.

The facility evaluation apparatus 1 is an apparatus that evaluates values of facilities provided in buildings. In the example shown in FIG. 1, in response to requests from the user terminal device 3, the facility evaluation apparatus 1 evaluates values of facilities provided in a specific building, and displays results of the evaluation on a screen of the user terminal device 3. For example, the facility evaluation apparatus 1 includes one or a plurality of computers connected to the communication network 9 (such as a computer group that provides cloud computing). The facility evaluation apparatus 1 shown in FIG. 1 includes a communication unit 11, a storage unit 12, and a processing unit 13.

The communication unit 11 communicates with other apparatuses (such as the user terminal device 3) via the communication network 9. The communication unit 11 includes a device (such as network interface card) that performs communication according to a predetermined communication standard such as Ethernet (trademark) or that of wireless LAN.

The storage unit 12 stores, for example, one or more programs PG that include commands which can be executed by the processing unit 13, data that is temporarily stored in a procedure of processes by the processing unit 13, data that is utilized in the processes by the processing unit 13, and data obtained as results of the processes by the processing unit 13. The storage unit 12 may include main storage devices (such as a RAM and a ROM) and auxiliary storage devices (such as a flash memory, an SSD, a hard disk, a memory card, and an optical disk). The storage unit 12 may be constituted by a single storage device, or may be constituted by a plurality of storage devices. When the storage unit 12 is constituted by the plurality of storage devices, these storage devices are connected to the processing unit 13 via a computer bus or other arbitrary communication means.

The processing unit 13 comprehensively controls overall operation of the facility evaluation apparatus 1, and executes predetermined information processes. The processing unit 13 includes one or more processors (such as a CPU (central processing unit), an MPU (micro-processing unit), and a DSP (digital signal processor)) that execute the processes in accordance with the commands of the one or more programs PG stored in the storage unit 12. The one or more processors execute the commands of the one or more programs PG stored in the storage unit 12. With this, the processing unit 13 operates as a computer.

The processing unit 13 may include one or more dedicated hardware modules (such as an ASIC (application specific integrated circuit) and an FPGA (field-programmable gate array)) configured to implement specific functions. In this case, the processing unit 13 may execute, as the computer, all the processes described in this embodiment, or may execute at least a subset of the processes by using the dedicated hardware modules.

The one or more programs PG may be recorded, for example, in a computer-readable recording medium (such as an optical disk, a memory card, a USB flash drive, or other non-transitory tangible media). The processing unit 13 may load, via a recording-medium reading device (such as an optical disk drive) (not shown) or an interface device (such as a USB interface) (not shown), at least a subset of the one or more programs PG recorded in the recording medium as mentioned above, and may write these programs PG into the storage unit 12. Alternatively, the processing unit 13 may download, from other apparatuses to be connected to the communication network 9 via the communication unit 11, at least a subset of the one or more programs PG, and may write these programs PG into the storage unit 12. The one or more programs PG include a command to cause the processing unit 13 to execute at least a subset of facility evaluation processes described below.

A database group 2 includes one or more databases storing various information to be used in the processes by the facility evaluation apparatus 1. The facility evaluation apparatus 1 and the database group 2 are communicable with each other via an arbitrary communication network (such as a LAN, a leased line network, or the Internet). In the example shown in FIG. 1, the database group 2 includes a facility management database 21, a facility service database 22, a part database 23, a service record database 24, and a facility evaluation database 25. For example, the database group 2 includes one or more computers that constitute these databases, and store information of these databases into storage devices of the computers. Note that, the facility evaluation apparatus 1 and the database group 2 may be constituted by a common computer. In the following description, the databases may sometimes be abbreviated as "DBs."

### [Facility Management Database 21]

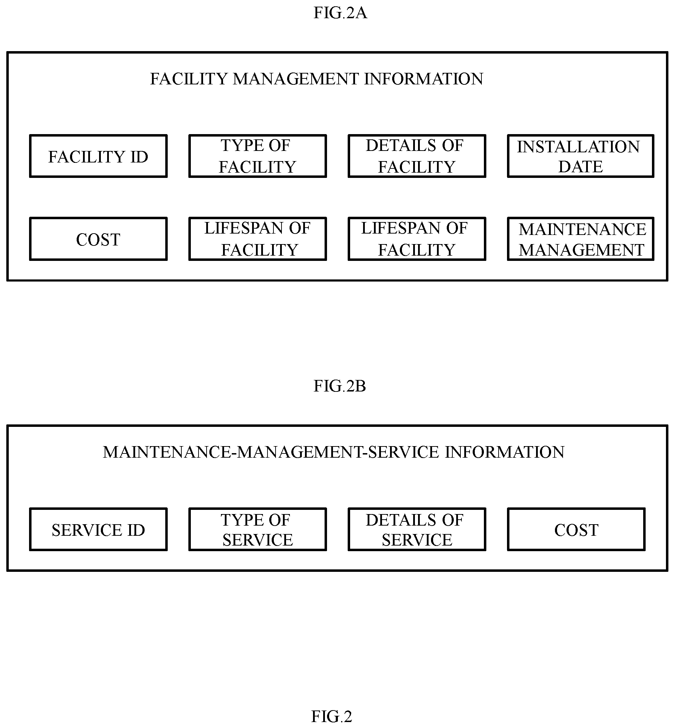

The facility management database 21 stores, in a searchable manner, facility-management information items about the facilities provided in the specific building. One facility-management information item includes information about one facility. As shown in FIG. 2A, the facility-management information items each include at least ones of the following information items.
■ Identification Information for Identifying Individual Facility (Facility ID)
■ Facility-Type Information That Indicates Type of Facility

Examples of the type of the facility include an elevator facility, an electrical facility, an air-conditioning facility, a water supply/drainage facility, a gas facility, a dust treatment facility, a fire extinguishing/smoke exhaust facility, and a lightning-rod facility.
■ Facility Detail Information That Indicates Details of Facility

The facility detail information includes information such as the name of the facility, the name of a manufacturer, a model, and specifications of the facility.
■ Installation Date of Facility

The installation date of the facility indicates, for example, a date on which a new facility is installed, or a date on which the facility is replaced with new one.
■ Costs Required for Installation and Replacement of Facility
■ Information About Parts That Constitute Facility

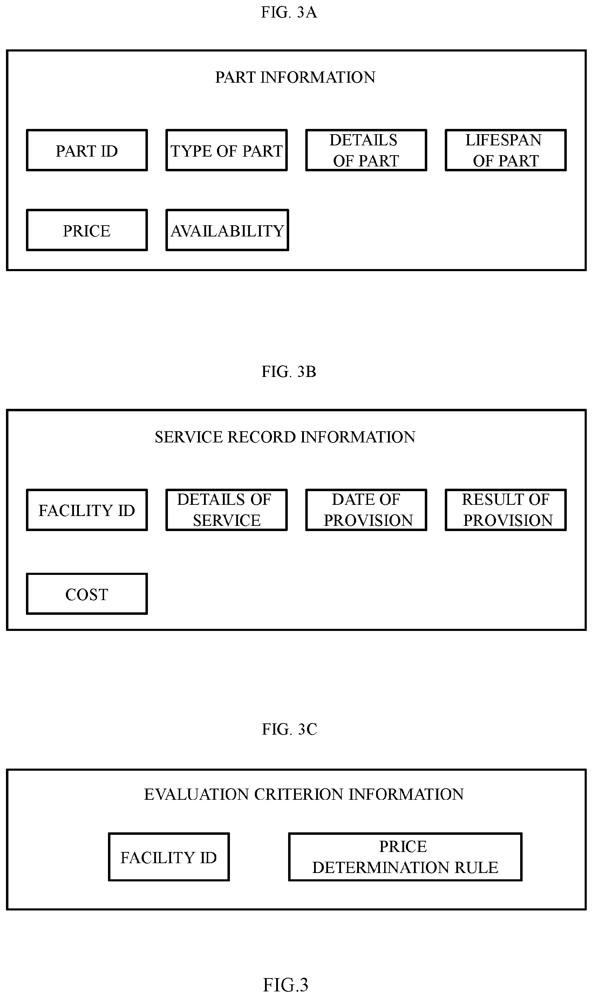

The information about the parts that constitute the facility includes a part ID (FIG. 3A) to be registered with the part DB 23 described below.
■ Facility Lifespan

The facility lifespan indicates an estimate of a period during which the facility is normally operational. A date on which a period corresponding to the facility lifespan has elapsed since the installation date of the facility is an estimate of the date on which the facility is replaced. The facility lifespan is set on the basis of, for example, information about a standard lifespan, the information being provided from the manufacturer, or of an average lifespan of facilities of the same model, the facilities having been actually used.
■ Information about Maintenance Management Service

The information about the maintenance management service is information about a service (the maintenance management service) to be provided for maintaining the facility, and includes a service ID (FIG. 2B) to be registered with the facility service DB 22 described below.

### [Facility Service DB 22]

The facility service DB 22 stores, in a searchable manner, maintenance-management-service information items about the maintenance management service for the facility. One maintenance-management-service information item includes information about one maintenance-management service. As shown in FIG. 2B, the maintenance-management-service information items each include at least ones of the following information items.
■ Identification Information for Identifying Individual Maintenance-Management Service (Service ID)
■ Service-Type Information That Indicates Type of Maintenance Management Service

Examples of the type of the maintenance management service include an inspection service, a part replacement service, and a repair service that are provided to a specific facility (such as a facility of a specific type or a facility of a specific model).
■ Service Detail Information That Indicates Details of Maintenance Management Service

The service detail information includes information such as a name of the service, information about a procedure of the service, and information about a part to be inspected or replaced in the inspection service or the part replacement service (part ID).
■ Standard Cost That Is Required for Providing Maintenance Management Service

Examples of the standard cost that is required for providing the maintenance management service include a standard labor cost for the inspection service or an adjustment service, a standard labor cost and a standard replacement-part cost for the part replacement service, and a standard labor cost and a standard repair-material cost for repair work.

### [Part DB 23]

The part DB 23 stores, in a searchable manner, part information about parts that constitute the facility (specifically, parts that are possible to replace through the maintenance management service). One part information item includes information about one part. As shown in FIG. 3A, the part information items each include at least ones of the following information items.
■ Identification Information for Identifying Individual Part (Part ID)
■ Part-Type Information That Indicates Type of Part

Examples of the type of the part include a classification of a mechanical component in a case where the part is a mechanical part, a classification of a circuit component in a case where the part is an electrical circuit part, information about a facility in which the part is used (type of the facility and model of the facility), and information about a section of the facility in which the part is used.
■ Part Detail Information That Indicates Details of Part

The part detail information includes information such as a name of the part, the name of a manufacturer, a model, and specifications of the part.
■ Part Lifespan

The part lifespan indicates an estimate of a period during which the part is normally operational. The part lifespan is set on the basis of, for example, information about a standard lifespan, the information being provided from the manufacturer, or of an average lifespan of parts of the same model, the parts having been actually used.
■ Price of Part

The price of the part indicates, for example, a standard unit price of the part.
■ Availability information that indicates whether or not the part is available

The availability information indicates whether or not the part has become unavailable because, for example, the manufacturer has stopped manufacturing the parts or stocks of the parts have depleted.

### [Service Record DB 24]

The service record DB 24 stores, in a searchable manner, service-record information items about records of maintenance management services that have been provided to the specific facility. One service-record information item includes information such as details and a result of one maintenance-management service that has been provided once to one of the facilities provided in the specific building. As shown in FIG. 3B, the service-record information items each include at least ones of the following information items.
■ Identification Information of Facility to Which Maintenance Management Service Has Been Provided (Facility ID)
■ Information About Details of Provided Service

The information about details of the provided service includes the service ID registered with the facility service DB 22. If a service that has not been registered with the facility service DB 22 is provided, information about details of this service may include information corresponding to the service detail information in the maintenance-management-service information (FIG. 2B).
■ Information About Date on Which Maintenance Management Service Was Provided

The information about the date on which the maintenance management service was provided may include information of a year in, a month in, and a date on which the maintenance management service was provided, or may include only information of the year and the month or only information of the year of the year, the month, and the date. Below, the "Information About Date on Which Maintenance Management Service Was Provided" may sometimes be referred to as "first information."
■ Information About Result of Provision of Maintenance Management Service

The information about a result of provision of the maintenance management service includes information about a condition of the facility, the condition having been updated through the maintenance management service. Below, the "information about a condition of the facility, the condition having been updated through the maintenance management service" may sometimes be referred to as "second information." The second information may include information as follows.

### <In Case of Inspection Service>

Deterioration degree information that indicates a deterioration degree of the facility, the deterioration degree having been revealed through inspection (such as a measured value that is obtained by a measuring instrument, a numerical value that is indicated by a gauge of the facility, or a quantity of inspection objects that have been visually checked)

### <In Case of Part Replacement Service>

Replaced part information about a replaced part (such as a model number and a quantity of the part)

### <In Case of Adjustment Service for Devices Included in Facility>

Deterioration degree information that indicates a deterioration degree of the facility, the deterioration degree having been revealed through adjustment of devices included in the facility (such as a device adjustment value that is obtained by a measuring instrument or a gauge of the facility, or a quantity of adjustment objects that have been visually checked)

### <In Case of Repair Service>

Repair information about details of repairs (such as a numerical value that indicates a condition of the facility, the condition having been updated by the repairs)
■ Cost Required for Providing Maintenance Management Service

Examples of the cost required for providing the maintenance management service include labor costs for the inspection service and the adjustment service, a labor cost and a replacement part cost for the part replacement service, and a labor cost and a repair material cost for repair work. Note that, if the cost required for providing the maintenance management service is the same as the "Standard Cost That Is Required for Providing Maintenance Management Service" in the maintenance-management-service information (FIG. 2B), the cost may be omitted.

### [Facility Evaluation DB 25]

The facility evaluation DB 25 stores, in a searchable manner, evaluation criterion information about evaluation criteria for values of the facilities. One evaluation-criterion information item includes information about an evaluation criterion for one facility. As shown in FIG. 3C, the evaluation criterion information includes the following information items.
■ Identification Information of Facility to Be Evaluated (Facility ID)
■ Value Determination Rule

The value determination rule is a rule according to which a numerical value (evaluation value) that indicates a value of the one facility is determined with use of information items given, for example, from the service record information (FIG. 3B). The value determination rule may be a function that derives an evaluation value according to given parameters (such as the information items included in the service record information).

At the time of determining the evaluation value that indicates the value of the one facility, the value determination rule may be based on an at least one of a lapse of time since provision of an at least one maintenance-management service that is possible to provide to the one facility (lapse of time since provision of a latest maintenance-management service), the number of times of the provision, and a frequency of the provision. In this case, specifically, if, for example, a lapse of time since provision of the maintenance management service that should be provided to maintain normal operation of the facility (such as the part replacement service, the device adjustment service, or the repair service) is longer than standard, the number of times of the provision is smaller than standard, or a frequency of the provision is lower than standard, an evaluation value which indicates that the value of the facility is lower than standard is determined according to the value determination rule.

The user terminal device 3 is a device that has an information communication function, such as a personal computer, a tablet, or a smartphone, and that is operated by a user who wants evaluation of the values of the facilities provided in the specific building. The user terminal device 3 includes not only a processing unit, a storage unit, and a communication unit that are similar to the communication unit 11, the storage unit 12, and the processing unit 13 of the facility evaluation apparatus 1, but also an input unit that allows an instruction from the user to be input to the processing unit (input devices such as a touchscreen, a mouse, and a keyboard), and a display unit that displays the results of the evaluation by the facility evaluation apparatus 1 (display device such as a liquid-crystal display).

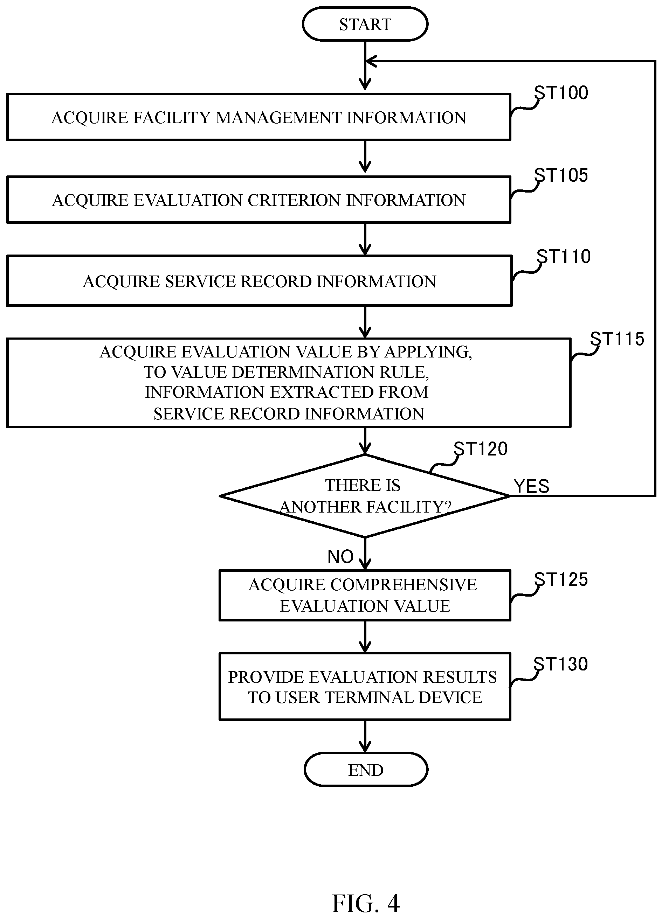

Now, the facility evaluation processes to be executed by the facility evaluation apparatus 1 having the above-described configuration are described with reference to the flowchart of FIG. 4.

### ST100:

The processing unit 13 of the facility evaluation apparatus 1 acquires the facility management information of one facility provided in a specific building from the facility management DB 21 in response to a request from the user terminal device 3.

### ST105:

The processing unit 13 of the facility evaluation apparatus 1 acquires the evaluation criterion information of the one facility of from the facility evaluation DB 25 on the basis of the facility ID included in the facility management information acquired from the facility management DB 21.

### ST110:

The processing unit 13 of the facility evaluation apparatus 1 acquires information to be used for determining an evaluation value of the one facility (below, sometimes referred to as a "value determining parameter") according to the value determination rule in the evaluation criterion information acquired in Step ST105, the information to be used being acquired from the service record information of the one facility, the service record information being stored in the service record DB 24.

According to the value determination rule, the information (value determining parameter) in the service record information, the information being used for determining the evaluation values, is set with regard to each of at least a subset of the maintenance management services. The processing unit 13 acquires the value determining parameter set with regard to each of the maintenance management services according to the value determination rule for the one facility from the service record information of the one facility, the service record information being stored in the service record DB 24.

For example, the value determining parameter set with regard to one of the maintenance management services to be provided to the one facility is the "Information About Date on Which Maintenance Management Service Was Provided" (first information). In this case, the processing unit 13 of the facility evaluation apparatus 1 acquires the "Information About Date on Which Maintenance Management Service Was Provided" (first information) as the value determining parameter from the service record information (FIG. 3B) corresponding to the one of the maintenance management services to be provided to the one facility.

### ST115:

The processing unit 13 of the facility evaluation apparatus 1 applies the information (value determining parameter) to the value determination rule in the evaluation criterion information acquired in Step ST105, the information (value determining parameter) having been acquired in Step ST110 from the service record information with regard to each of the maintenance management services. In this way, the evaluation value that indicates the value of the one facility is acquired.

For example, at the time of determining the evaluation value that indicates the value of the one facility, the value determination rule is based on the at least one of the "lapse of time since provision" of the at least one maintenance-management service that is possible to provide to the one facility" (lapse of time since provision of a latest maintenance-management service), the "number of times of the provision," and the "frequency of the provision." In this case, the processing unit 13 of the facility evaluation apparatus 1 acquires the "Information About Date on Which Maintenance Management Service Was Provided" (first information) as the value determining parameter from the service record information (FIG. 3B) corresponding to the at least one maintenance-management service that is possible to provide to the one facility (ST105). Then, the processing unit 13 acquires the evaluation value that indicates the value of the one facility according to the value determination rule and on the basis of the at least one of the "lapse of time since provision," the "number of times of the provision," and the "frequency of the provision" that are derived from the "Information About Date on Which Maintenance Management Service Was Provided" (first information) acquired with regard to the at least one maintenance-management service. Specifically, the processing unit 13 acquires the evaluation value which indicates that the value of the facility is lower than standard according to the value determination rule if the "lapse of time since provision" is longer than standard, the "number of times of the provision" is smaller than standard, or the "frequency of the provision" is lower than standard.

### ST120:

After the processing unit 13 of the facility evaluation apparatus 1 has acquired the evaluation value of the one facility through Steps ST100 to ST115, if there is another facility for which the evaluation value should be acquired, the processing unit 13 executes the processes of Steps ST100 to ST115 again on this facility, thereby acquiring the evaluation value.

### ST125:

After the processing unit 13 of the facility evaluation apparatus 1 has acquired the evaluation values of all the facilities provided in the specific building, the processing unit 13 acquires, on the basis of these acquired evaluation values, a comprehensive evaluation value that indicates a value of all the facilities provided in the specific building. For example, the processing unit 13 may acquire a sum or an average of the evaluation values of all the facilities as the comprehensive evaluation value. Alternatively, the processing unit 13 may acquire a sum or an average of weighted evaluation values as the comprehensive evaluation value, the weighted evaluation values being obtained by multiplying the evaluation values of all the facilities by weighting coefficients in proportion to the installation costs (FIG. 2A) of the facilities. In the latter case, the comprehensive evaluation value to be obtained is likely to be close to economic values of the facilities.

### ST130:

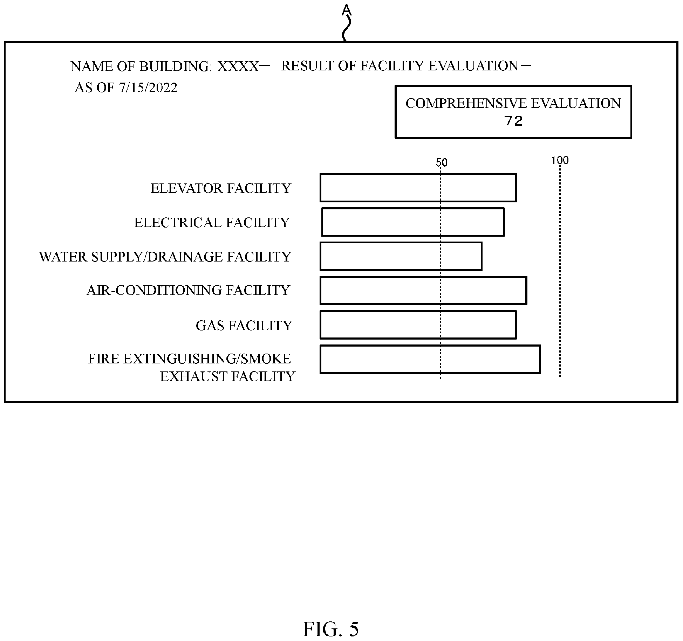

After the processing unit 13 of the facility evaluation apparatus 1 has acquired the respective evaluation values of the facilities and the comprehensive evaluation value of all the facilities, the processing unit 13 transmits these evaluation results to the user terminal device 3, and displays these evaluation results on a screen of the user terminal device 3. FIG. 5 is an image of an example of the screen of the user terminal device 3, the screen displaying the results of the evaluation of the values of the facilities. This screen A shown in FIG. 5 displays a bar graph of evaluation values acquired with regard to the facilities (elevator facility, electrical facility, water supply/drainage facility, air-conditioning facility, gas facility, and fire extinguishing/smoke exhaust facility), and a comprehensive evaluation value of all these facilities.

As described above, according to this embodiment, with regard to each of one or more facilities provided in a specific building, information that is included in the service record information (FIG. 3B) about one or more maintenance management services is applied to the value determination rule that is included in the evaluation criterion information. With this, evaluation values that indicate values of the facilities are acquired. Thus, values of facilities in a building, the values being possible to vary depending on past results of maintenance management services that are previously provided, can be properly evaluated.

**In** addition, according to this embodiment, the evaluation values of the facilities are acquired according to the value determination rule in the value evaluation information and on the basis of the at least one of the "lapse of time since provision," the "number of times of the provision," and the "frequency of the provision" of the maintenance management service, the "lapse," the "number of time," the "frequency" being derived from the "Information About Date on Which Maintenance Management Service Was Provided" (first information) included in the service record information (FIG. 3B). With this, proper evaluation values in accordance with a time interval, the number of times, and the frequency of the provision of the maintenance management service can be acquired.

Next, some modifications of the facility evaluation apparatus 1 according to this embodiment are described.

### (Modification 1)

Evaluation values of facilities need not necessarily be acquired by acquiring, as the value determining parameter and from the service record information (FIG. 3B), the "Information About Date on Which Maintenance Management Service Was Provided" (first information) included in the service record information, and by applying this value-determining parameter to the value determination rule as described above in the example of this embodiment. For example, the value determination rule for each of at least a subset of the facilities may be a rule that uses, as the value determining parameter, both the "Information About Date on Which Maintenance Management Service Was Provided" (first information) and the "information about a condition of the facility, the condition having been updated through the provision of the maintenance management service" (second information) that are included in the service record information (FIG. 3B).

In this case, according to the value determination rule, an evaluation value of the one of the facilities is determined, for example, on the basis of the at least one of the "lapse of time since provision," the "number of times of the provision," and the "frequency of the provision" of the at least one maintenance-management service that is possible to provide to the one facility, and on the basis of a condition of the one facility, the condition having been updated through the at least one maintenance-management service that is possible to provide to the one facility. According to this value determination rule, for example, the evaluation value is determined to indicate that the value of the facility becomes lower as a deterioration degree to be indicated by the "information about a condition of the facility, the condition having been updated through the provision of the maintenance management service" (second information) becomes higher.

The processing unit 13 of the facility evaluation apparatus 1 acquires the evaluation value of the one of the facilities (ST115 in FIG. 4) by applying, to this value determination rule and as the value determining parameter, both the "Information About Date on Which Maintenance Management Service Was Provided" (first information) and the "information about a condition of the facility, the condition having been updated through the provision of the maintenance management service" (second information) that are included in the service record information (FIG. 3B). For example, the processing unit 13 acquires, according to the value determination rule, the evaluation value which indicates that the value of the facility becomes lower as the deterioration degree to be indicated by the "information about a condition of the facility, the condition having been updated through the provision of the maintenance management service" (second information) becomes higher.

According to this modification, the evaluation value of a facility is acquired in consideration of the "information about a condition of the facility, the condition having been updated through the provision of the maintenance management service" (second information). With this, a proper evaluation value in accordance with a condition of the facility is likely to be obtained.

### (Modification 2)

Values of facilities vary depending on operational periods of these facilities. Specifically, even when the facilities are the same as each other, their values are high if their operational periods are long, and their values are low if their operational period are short. Thus, the value determination rule for at least a subset of the facilities may be a rule according to which the values of the facilities are determined in accordance with the operational periods of the facilities.

**In** this case, the value determination rule for at least the subset of the facilities includes two rules (a first rule and a second rule).

According to the first rule, an operational period during which one facility is estimated to be operational is determined on the basis of the at least one of the "lapse of time since provision," the "number of times of the provision," and the "frequency of the provision" of the at least one maintenance-management service that is possible to provide to the one facility, and on the basis of the condition of the one facility, the condition having been updated through the at least one maintenance-management service that is possible to provide to the one facility.

For example, the first rule includes a rule according to which the operational period of the facility is set to be shorter than standard in accordance with the "Information About Date on Which Maintenance Management Service Was Provided" (first information) if the "lapse of time since provision" of the maintenance management service is longer than standard, the "number of times of the provision" of this service is smaller than standard, or the "frequency of the provision" of this service is lower than standard.

In addition, the first rule includes a rule according to which the operational period of the facility is determined in accordance with the "information about a condition of the facility, the condition having been updated through the provision of the maintenance management service" (second information). For example, the first rule includes a rule according to which the operational period of the facility is determined in accordance with the "deterioration degree information," the "repair information," the "replaced part information," and the like being the "information about a condition of the facility, the condition having been updated through the provision of the maintenance management service" (second information).

Specifically, the first rule may include a rule according to which, in accordance with the "deterioration degree information" (second information) that indicates a deterioration degree of the facility, the deterioration degree having been revealed through the inspection service or the adjustment service, the operational period is set to be shorter as the deterioration degree of the facility becomes higher.

Further, the first rule may include a rule according to which, in accordance with the "repair information" (second information) about details of repairs that have been made to the facility through the repair service, the operational period is set to be shorter as the number of times of the repairs becomes smaller, and a rule according to which, in accordance with the "repair information" (second information), the operational period is set to be shorter as the number of elapsed days since a latest repair becomes larger.

Still further, the first rule may include a rule according to which, in accordance with the "replaced part information" (second information) about a part of the facility, the part having been replaced through the part replacement service, the operational period is set to be shorter as the number of times of replacement of the part of the facility, and a rule according to which, in accordance with the "replaced part information" (second information), the operational period is set to be shorter as the number of elapsed days since latest part replacement becomes larger.

According to the second rule, an evaluation value of the one facility is determined on the basis of the operational period that has been determined with regard to the one facility according to the first rule. Specifically, according to the second rule, the evaluation value is determined to indicate that a value of the facility becomes higher as the operational period becomes longer.

For example, the second rule may include a rule according to which an evaluation value in accordance with a proportion of the operational period that has been determined with regard to the one facility relative to an average facility lifespan of the one facility (below, sometimes referred to as an "operational-period proportion") is determined on the basis of the determined operational period. In this case, according to the second rule, an evaluation value may be determined to indicate that a value of a facility becomes higher as the operational-period proportion relative to an average lifespan of the facility becomes higher. Specifically, according to the second rule, an evaluation value in proportion to the operational-period proportion may be determined. Such a second rule enables evaluation values of a plurality of facilities that are different from each other in average facility lifespan to be compared to each other in terms of a magnitude of the operational-period proportion.

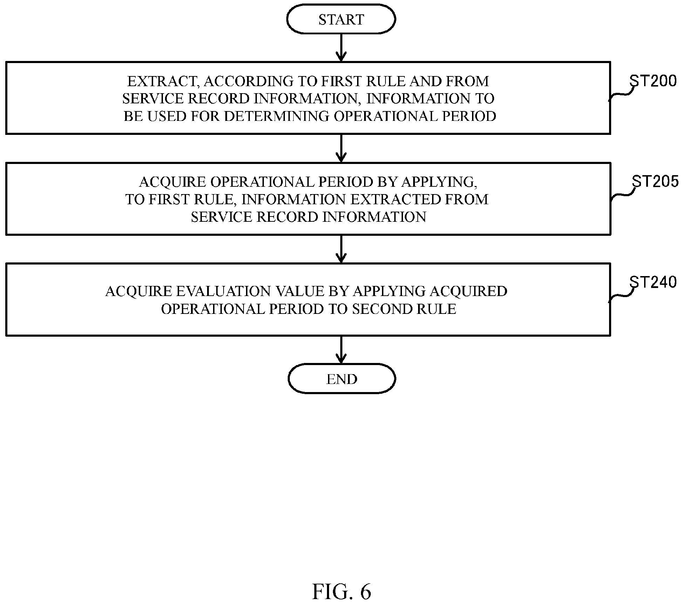

FIG. 6 is an explanatory flowchart showing an example of the process of acquiring an evaluation value of a facility (ST115: FIG. 4) in this modification. At the time of acquiring evaluation values of at least a subset of facilities provided in a building, the processing unit 13 of the facility evaluation apparatus 1 executes processes shown in FIG. 6.

### ST200:

First, the processing unit 13 of the facility evaluation apparatus 1 extracts information (the value determining parameter) to be used for determining the operational period of one facility, the information being extracted according to the first rule that is included in the value determination rule for the one facility and from the service record information (FIG. 3B) of the one facility, the service record information having been acquired in Step ST110 (FIG. 4). For example, the processing unit 13 extracts the "Information About Date on Which Maintenance Management Service Was Provided" (first information) and the "information about a condition of the facility, the condition having been updated through the provision of the maintenance management service" (second information) that are included in the service record information (FIG. 3B).

### ST205:

The processing unit 13 of the facility evaluation apparatus 1 applies the information (first information and second information) to the first rule for the one facility, the information having been extracted from the service record information (FIG. 3B) of the one facility in Step ST200. In this way, the operational period of the one facility is acquired.

For example, the processing unit 13 of the facility evaluation apparatus 1 acquires the evaluation value of the one facility according to the first rule and on the basis of the at least one of the "lapse of time since provision," the "number of times of the provision," and the "frequency of the provision" that are derived from the "Information About Date on Which Maintenance Management Service Was Provided" (first information) extracted in Step ST200. Specifically, the processing unit 13 acquires the operational period that is shorter than standard according to the first rule if the "lapse of time since provision" is longer than standard, the "number of times of the provision" is smaller than standard, or the "frequency of the provision" is lower than standard.

Further, the processing unit 13 of the facility evaluation apparatus 1 applies the "information about a condition of the facility, the condition having been updated through the provision of the maintenance management service" (second information) to the first rule, the second information having been extracted in Step ST200. With this, the operational period of the facility is acquired.

For example, the processing unit 13 may apply the "deterioration degree information" (second information) extracted in Step ST200 to the first rule so that an operational period that becomes shorter as the deterioration degree of the facility becomes higher may be acquired.

Alternatively, the processing unit 13 may apply the "repair information" (second information) acquired in Step ST200 to the first rule so that an operational period that becomes shorter as the number of times of repairs becomes smaller may be acquired, or that an operational period that becomes shorter as the number of elapsed days since a latest repair becomes larger may be acquired.

Still alternatively, the processing unit 13 may apply the "replaced part information" (second information) acquired in Step ST200 to the first rule so that an operational period that becomes shorter as the number of times of part replacement becomes smaller may be acquired, or that an operational period that becomes shorter as the number of elapsed days since latest part replacement becomes larger may be acquired.

### ST240:

The processing unit 13 of the facility evaluation apparatus 1 applies the operational period acquired with regard to the one facility in Step ST205 to the second rule for the one facility, the second rule being included in the evaluation criterion information. With this, the evaluation value of the one facility is acquired.

For example, the second rule includes a rule according to which an evaluation value in accordance with the operational-period proportion is determined. In this case, the processing unit 13 of the facility evaluation apparatus 1 applies, to the second rule for the one facility, the operational-period proportion that is calculated on the basis of the operational period acquired with regard to the one facility in Step ST205, and on the basis of the facility lifespan included in the facility management information (FIG. 2A) of the one facility. With this, the evaluation value of the one facility is acquired in accordance with the operational-period proportion.

According to this modification, the operational period of a facility is acquired by applying the information (first information and second information) included in the service record information (FIG. 3B) to the first rule, and the evaluation value of the facility in accordance with the operational period is acquired by applying the operational period to the second rule. With this, an evaluation value that properly reflects the operational period of the facility is likely to be obtained.

In addition, according to this modification, the evaluation value is acquired according to the second rule that determines the evaluation value in accordance with the operational-period proportion. This enables evaluation values of a plurality of facilities that are different from each other in facility lifespan to be compared to each other in terms of the magnitude of the operational-period proportion.

### (Modification 3)

In order that an evaluation value of a facility is close to an economic (financial) value of the facility, it is necessary for the value determination rule to include a rule according to which an evaluation value in accordance with costs for the facility (the costs required for installation and replacement of the facility) is determined. In view of such circumstances, in this modification, the second rule according to which the evaluation value is determined on the basis of the operational period includes a rule according to which an evaluation value in accordance with the facility installation cost (cost required for the installation of the facility) is determined. Specifically, the second rule includes a rule according to which an evaluation value in accordance with the operational-period proportion relative to the average facility lifespan of one facility and with the facility installation cost required for installation of the one facility is determined on the basis of the operational period that has been determined with regard to the one facility.

For example, the evaluation value to be determined according to the second rule may indicate that a value of a facility increases in a case where the operational-period proportion relative to the average facility lifespan increases, or a case where the facility installation cost increases. Specifically, an evaluation value in proportion to the operational-period proportion and the facility installation cost may be determined.

The processing unit 13 of the facility evaluation apparatus 1 applies, to the second rule for the one facility, the operational-period proportion that is calculated on the basis of the operational period acquired with regard to the one facility in Step ST205, and on the basis of the average facility lifespan included in the facility management information (FIG. 2A) of the one facility, and applies, to the second rule, the facility installation cost for the one facility, the cost being included in the facility management information (FIG. 2A). With this, the processing unit 13 acquires the evaluation value of the one facility in accordance with the operational-period proportion and the facility installation cost.

According to this modification, the evaluation value in accordance with the facility installation cost is acquired, and hence the evaluation value of a facility can be close to the economic (financial) value of the facility.

### (Modification 4)

In Modification 3 described above, the second rule according to which the evaluation value is determined on the basis of the operational period includes the rule according to which the evaluation value in accordance with the facility installation cost is determined. However, costs for a facility include not only the costs at a time of installation, but also a cost for a maintenance management service after the installation. In view of such circumstances, in this modification, the second rule according to which the evaluation value is determined on the basis of the operational period includes not only the rule according to which the evaluation value in accordance with the facility installation cost is determined, but also a rule according to which an evaluation value in accordance with the maintenance management cost required for maintenance management of the facility is determined. Specifically, the second rule includes a rule according to which an evaluation value in accordance with the operational-period proportion relative to the average facility lifespan of one facility, with the facility installation cost required for the one facility, and with the maintenance management cost required for the installation of the one facility is determined on the basis of the operational period that has been determined with regard to the one facility.

For example, the evaluation value to be determined according to the second rule may indicate that a value of a facility increases in the case where the operational-period proportion relative to the average facility lifespan increases, the case where the facility installation cost increases, or a case where the maintenance management cost increases. Specifically, an evaluation value in proportion to the operational-period proportion and in proportion to a sum of the facility installation cost and the maintenance management cost may be determined.

According to such a second rule, the evaluation value can be determined in accordance with the facility installation cost and the maintenance management cost, which enables the value to be indicated as the evaluation value can be close to the economic value of the facility.

The processing unit 13 of the facility evaluation apparatus 1 applies, to the second rule for the one facility, the operational-period proportion that is calculated on the basis of the operational period acquired with regard to the one facility in Step ST205, and on the basis of the average facility lifespan included in the facility management information (FIG. 2A) of the one facility, and also applies, to the second rule, both the facility installation cost for the one facility, the facility installation cost being included in the facility management information (FIG. 2A), and the maintenance management cost for the one facility, the maintenance management cost being included in the service record information (FIG. 3B) or in the maintenance-management-service information (FIG. 2B). With this, the processing unit 13 acquires the evaluation value of the one facility in accordance with the operational-period proportion, the facility installation cost, and the maintenance management cost.

According to this modification, the evaluation value in accordance with the facility installation cost and the maintenance management cost is acquired, and hence the evaluation value of a facility can be close to the economic (financial) value of the facility.

### (Modification 5)

At a time when the part replacement service to replace a part such as a consumable part is provided as the maintenance management service for a facility, if the part is unavailable because, for example, a manufacturer has stopped manufacturing the parts or stocks of the parts have depleted, the part replacement service cannot be provided, which may inevitably result in replacement of an entirety of the facility. In view of such circumstances, in this modification, the first rule according to which the operational period is determined includes a rule according to which upper limits on the operational period of the facility are set in accordance with availability information included in the part information (FIG. 3A). Specifically, the first rule includes a rule according to which, in a case where parts that are possible to replace through the part replacement service include a part that is indicated to be unavailable by the availability information in the part information (FIG. 3A), the upper limits on the operational period of the facility are set in accordance with an average lifespan of the part, the average lifespan being included in the part information (FIG. 3A), and with a use-start time (date on which a latest part-replacement service was provided) of the part, the use-start time being included in the service record information (FIG. 3B).

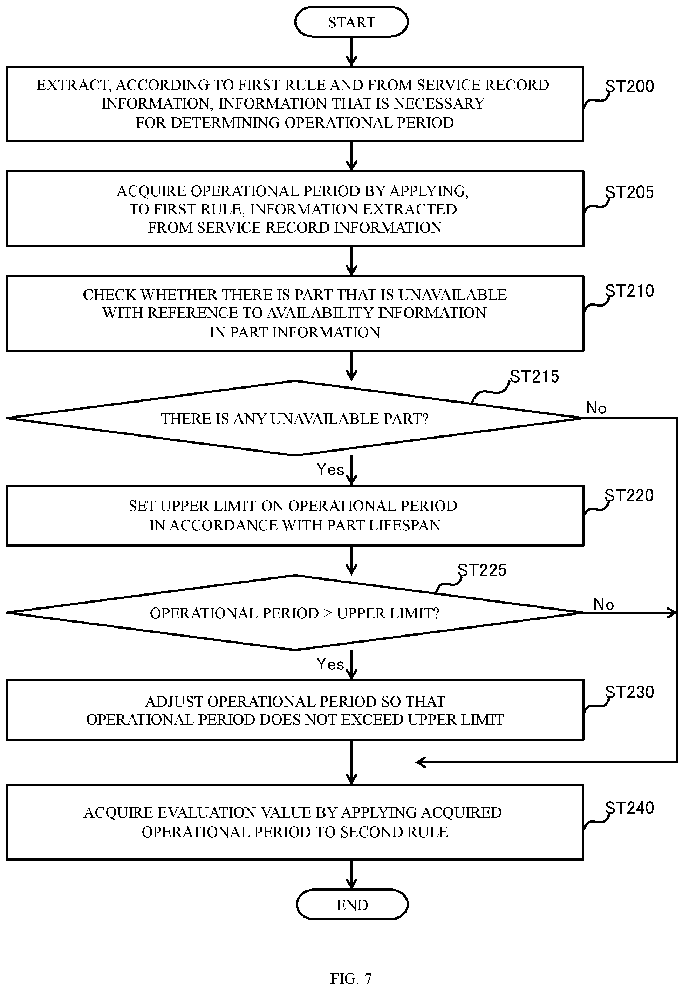

FIG. 7 is an explanatory flowchart showing another example of the process of acquiring an evaluation value of a facility (ST115: FIG. 4) in this modification. At the time of acquiring evaluation values of at least a subset of facilities provided in a building, the processing unit 13 of the facility evaluation apparatus 1 executes processes shown in FIG. 7. The flowchart shown in FIG. 7 is different from the flowchart shown in FIG. 6 in further including Steps ST215 to ST230, and other Steps are the same as those in the flowchart shown in FIG. 6. Here, processes (ST215 to ST230) that are not included in the flowchart shown in FIG. 6 are described.

### ST215:

The processing unit 13 of the facility evaluation apparatus 1 searches the service record information (FIG. 3B) in the facility service DB 22 for the part replacement service through which a part is replaced among the maintenance management services that are possible to provide in one facility. In addition, the processing unit 13 acquires information about a part to be replaced (such as the part ID) from the service record information about the part replacement service, the service record information having been revealed through the search. Then, the processing unit 13 acquires the availability information of the part to be replaced from the part information (FIG. 3A), and determines whether or not the availability information indicates that the part is unavailable. If the processing unit 13 determines that all parts are available (No in ST215), the processing unit 13 causes the procedure to proceed to Step ST240 described above. If the processing unit 13 determines that there is an unavailable part (Yes in ST215), the processing unit 13 causes the procedure to proceed to Step ST220.

### ST220:

The processing unit 13 of the facility evaluation apparatus 1 acquires, from the part information (FIG. 3A), an average part lifespan of the part that has been determined to be unavailable in Step ST215, and acquires, from the service record information (FIG. 3B), the use-start time (date on which a latest part-replacement service was provided) of the part. The processing unit 13 sets the upper limits on the operational period of the facility on the basis of the part lifespan and the use-start time of the unavailable part. For example, the processing unit 13 sets, as the upper limit on the operational period, a date (which may be a month or a year) on which a period corresponding to the part lifespan has elapsed since the use-start time.

### ST225:

The processing unit 13 of the facility evaluation apparatus 1 determines whether or not the operational period acquired in Step ST205 exceeds the at least one upper limit of the operational periods, the upper limit having been set in Step ST220. If the operational period acquired in Step ST205 has not exceeded any of the upper limits (No in ST225), the processing unit 13 causes the procedure to Step ST240 described above. If the operational period acquired in Step ST205 exceeds the at least one upper limit, the processing unit 13 causes the procedure to Step ST230.

### ST230:

The processing unit 13 of the facility evaluation apparatus 1 adjusts the operational period acquired in Step ST205 so that the operational period does not exceed any of the upper limits set in Step ST220. For example, the processing unit 13 adjusts the operational period so that a last date (which may be a last month or a last year) of the operational period is the same as a date (which may be a month or a year) of one upper limit of the upper limits set in Step ST220, the one upper limit being closest to a current time point.

According to this modification, the operational period of a facility is adjusted in accordance with availability of a part to be replaced through the part replacement service. Thus, a more proper evaluation value of the facility than that in a case where the availability of the part is not taken into account can be acquired.

Note that, the present invention is not limited only to the embodiment described hereinabove, and may be embodied in various other forms.

For example, the value determination rule that is included in the evaluation criterion information may be information that defines details of the processes of acquiring the evaluation value from the given value-determining parameter, and at least a part of the information may be information that issues an instruction to execute the processes by using a learned model generated in advance by a predetermined machine-learning algorithm (such as information for identifying a learned model that should be used for executing the processes). In this case, this learned model may be stored in the storage device that constitutes the storage unit 12, or may be stored in another storage device that is accessible to the processing unit 13.

In the example shown in FIG. 1, the results of the facility evaluation by the facility evaluation apparatus 1 need not necessarily be displayed on the screen of the user terminal device 3, and the results of the facility evaluation may be displayed on a screen of a display unit provided to the facility evaluation apparatus 1 if the facility evaluation apparatus 1 can be directly operated by the user.

Below, appendices [1] to [17] relating to this embodiment are described.
[1] A method that a facility evaluation apparatus which evaluates values of facilities provided in buildings carries out,
   the facility evaluation apparatus being capable of making access to one or more storage devices,
   the one or more storage devices storing
      service record information about records of one or more maintenance-management services that have been provided to each of one or more facilities among the facilities, the one or more facilities being provided in a specific building among the buildings, and
      evaluation criterion information about evaluation criteria for the values, the evaluation criteria having been set respectively for the facilities in advance,
   the service record information including a service-record information item about one maintenance-management service of the one or more maintenance-management services, the service-record information item including first information about a date on which the one maintenance-management service was provided,
   the evaluation criterion information including an evaluation-criterion information item about one facility of the facilities, the evaluation-criterion information item including a value determination rule according to which an evaluation value that indicates a value of the one facility among the values is determined,
   the service record information including at least a subset of service record information that includes second information about conditions of the facilities, the conditions having been updated through the provision of the one or more maintenance-management services,
   the value determination rule including a subset of value determination rules that include
      a first rule according to which an operational period during which the one facility is estimated to be operational is determined
         on the basis of an at least one of
            a lapse of time since the provision of an at least one maintenance-management service of the one or more maintenance-management services, the at least one maintenance-management service being possible to provide to the one facility,
            the number of times of the provision, and
            a frequency of the provision, and
         on the basis of a condition of the one facility, the condition having been updated through the at least one maintenance-management service that is possible to provide to the one facility, and
      a second rule according to which the evaluation value of the one facility is determined on the basis of the operational period that has been determined with regard to the one facility,
   the method including a first step of acquiring, by the facility evaluation apparatus, the evaluation value of each of the one or more facilities provided in the specific building by applying the first information included in the service-record information item corresponding to a corresponding one of the one or more maintenance-management services to the value determination rule that is included in the evaluation criterion information,
   the first step including
      acquiring the operational period of each of at least a subset of facilities provided in the specific building among the facilities by applying the first information and the second information that are included in the service record information to the first rule that is included in the evaluation criterion information, and
      acquiring the evaluation value of each of at least the subset of facilities provided in the specific building by applying the acquired operational period to the second rule that is included in the evaluation criterion information.
[2] The method according to [1],
   in which the one or more storage devices store part information about parts of the facilities, the parts being possible to replace through part replacement services,
   in which the part information includes availability information that indicates whether or not the parts are available,
   in which the first rule includes at least a subset of first rules that include a rule according to which, in a case where the parts include a part that is indicated to be unavailable by the availability information, an upper limit on the operational period is set in accordance with an average part lifespan of the part and a use-start time of the part, and
   in which the first step includes acquiring, in the case where the parts include the part that is indicated to be unavailable by the availability information included in the part information, the operational period of each of at least the subset of facilities provided in the specific building, the operational period being shorter than the upper limit in accordance with the average part lifespan of the part and the use-start time of the part.
[3] The method according to [1],
   in which the second rule includes at least a subset of second rules that include a rule according to which the evaluation value in accordance with a proportion of the operational period that has been determined with regard to the one facility relative to an average facility lifespan of the one facility is determined on the basis of the operational period that has been determined with regard to the one facility, and
   in which the first step includes acquiring the evaluation value in accordance with the proportion of the operational period relative to the average facility lifespan by applying the operational period to the second rule, the operational period having been acquired with regard to each of at least the subset of facilities provided in the specific building.
[4] The method according to [1],
   in which the second rule includes at least a subset of second rules that include a rule according to which the evaluation value in accordance with a proportion of the operational period that has been determined with regard to the one facility relative to an average facility lifespan of the one facility and with a facility installation cost required for installation of the one facility is determined on the basis of the operational period that has been determined with regard to the one facility, and
   in which the first step includes acquiring the evaluation value in accordance with the proportion of the operational period relative to the average facility lifespan and with the facility installation cost by applying the operational period to the second rule, the operational period having been acquired with regard to each of at least the subset of facilities provided in the specific building.
[5] The method according to [1],
   in which the second rule includes at least a subset of second rules that include a rule according to which the evaluation value in accordance with a proportion of the operational period that has been determined with regard to the one facility relative to an average facility lifespan of the one facility, with a facility installation cost required for installation of the one facility, and with a maintenance management cost required for maintenance management of the one facility is determined on the basis of the operational period that has been determined with regard to the one facility, and
   in which the first step includes acquiring the evaluation value in accordance with the proportion of the operational period relative to the average facility lifespan, with the facility installation cost, and with the maintenance management cost by applying the operational period to the second rule, the operational period having been acquired with regard to each of at least the subset of facilities provided in the specific building.
[6] The method according to any one of [1] to [5],
   in which the second information includes at least a subset of second information that is any of
      deterioration degree information that indicates deterioration degrees of the facilities, the deterioration degrees having been revealed through inspection services,
      repair information about details of repairs that have been made to the facilities through repair services, and
      replaced part information about parts of the facilities, the parts having been replaced through part replacement services,
   in which the first rule includes at least a subset of first rules that include an at least one of
      a rule according to which, in accordance with the deterioration degree information, the operational period is set to be shorter as a corresponding one of the deterioration degrees of a corresponding one of the facilities becomes higher,
      a rule according to which, in accordance with the repair information, the operational period is set to be shorter as the number of times of the repairs becomes smaller and/or as the number of elapsed days since a latest repair becomes larger, and
      a rule according to which, in accordance with the replaced part information, the operational period is set to be shorter as the number of times of the part replacement becomes smaller and/or as the number of elapsed days since latest part replacement becomes larger, and
   in which the first step includes an at least one of
      acquiring the operational period of each of at least the subset of facilities provided in the specific building, the operational period becoming shorter as a corresponding one of the deterioration degrees becomes higher, by applying the deterioration degree information and the first information that are included in the service record information to the first rule that is included in the evaluation criterion information,
      acquiring the operational period of each of at least the subset of facilities provided in the specific building, the operational period becoming shorter as the number of times of the repairs becomes smaller and/or as the number of the elapsed days since the latest repair becomes larger, by applying the repair information and the first information that are included in the service record information to the first rule that is included in the evaluation criterion information, and
      acquiring the operational period of each of at least the subset of facilities provided in the specific building, the operational period becoming shorter as the number of times of the part replacement becomes smaller and/or as the number of the elapsed days since the latest part replacement becomes larger, by applying the replaced part information and the first information that are included in the service record information to the first rule that is included in the evaluation criterion information.
[7] The method according to any one of [1] to [5], further including
   a second step of acquiring a comprehensive evaluation value that indicates the values of all the one or more facilities provided in the specific building on the basis of the evaluation value acquired with regard to each of the one or more facilities provided in the specific building.
[8] A facility evaluation apparatus that evaluates values of facilities provided in buildings, the facility evaluation apparatus including:
   a processing unit; and
   a storage unit that stores a command which the processing unit executes,
   the processing unit being capable of making access to one or more storage devices,
   the facility evaluation apparatus being capable of making access to one or more storage devices,
   the one or more storage devices storing
      service record information about records of one or more maintenance-management services that have been provided to each of one or more facilities among the facilities, the one or more facilities being provided in a specific building among the buildings, and
      evaluation criterion information about evaluation criteria for the values, the evaluation criteria having been set respectively for the facilities in advance,
   the service record information including a service-record information item about one maintenance-management service of the one or more maintenance-management services, the service-record information item including first information about a date on which the one maintenance-management service was provided,
   the evaluation criterion information including an evaluation-criterion information item about one facility of the facilities, the evaluation-criterion information item including a value determination rule according to which an evaluation value that indicates a value of the one facility among the values is determined,
   the service record information including at least a subset of service record information that includes second information about conditions of the facilities, the conditions having been updated through the provision of the one or more maintenance-management services,
   the value determination rule including a subset of value determination rules that include
      a first rule according to which an operational period during which the one facility is estimated to be operational is determined
         on the basis of an at least one of
            a lapse of time since the provision of an at least one maintenance-management service of the one or more maintenance-management services, the at least one maintenance-management service being possible to provide to the one facility,
            the number of times of the provision, and
            a frequency of the provision, and
         on the basis of a condition of the one facility, the condition having been updated through the at least one maintenance-management service that is possible to provide to the one facility, and
      a second rule according to which the evaluation value of the one facility is determined on the basis of the operational period that has been determined with regard to the one facility,
   a process that the processing unit executes in accordance with the command including a first step of acquiring the evaluation value of each of the one or more facilities provided in the specific building by applying the first information included in the service-record information item corresponding to a corresponding one of the one or more maintenance-management services to the value determination rule that is included in the evaluation criterion information,
   the first step including
      acquiring the operational period of each of at least a subset of facilities provided in the specific building among the facilities by applying the first information and the second information that are included in the service record information to the first rule that is included in the evaluation criterion information, and
      acquiring the evaluation value of each of at least the subset of facilities provided in the specific building by applying the acquired operational period to the second rule that is included in the evaluation criterion information.
[9] The facility evaluation apparatus according to [8],
   in which the one or more storage devices store part information about parts of the facilities, the parts being possible to replace through part replacement services,
   in which the part information includes availability information that indicates whether or not the parts are available,
   in which the first rule includes at least a subset of first rules that include a rule according to which, in a case where the parts include a part that is indicated to be unavailable by the availability information, an upper limit on the operational period is set in accordance with an average part lifespan of the part and a use-start time of the part, and
   in which the first step includes acquiring, in the case where the parts include the part that is indicated to be unavailable by the availability information included in the part information, the operational period of each of at least the subset of facilities provided in the specific building, the operational period being shorter than the upper limit in accordance with the average part lifespan of the part and the use-start time of the part.
[10] The facility evaluation apparatus according to [8],
   in which the second rule includes at least a subset of second rules that include a rule according to which the evaluation value in accordance with a proportion of the operational period that has been determined with regard to the one facility relative to an average facility lifespan of the one facility is determined on the basis of the operational period that has been determined with regard to the one facility, and
   in which the first step includes acquiring the evaluation value in accordance with the proportion of the operational period relative to the average facility lifespan by applying the operational period to the second rule, the operational period having been acquired with regard to each of at least the subset of facilities provided in the specific building.
[11] The facility evaluation apparatus according to [8],
   in which the second rule includes at least a subset of second rules that include a rule according to which the evaluation value in accordance with a proportion of the operational period that has been determined with regard to the one facility relative to an average facility lifespan of the one facility and with a facility installation cost required for installation of the one facility is determined on the basis of the operational period that has been determined with regard to the one facility, and
   in which the first step includes acquiring the evaluation value in accordance with the proportion of the operational period relative to the average facility lifespan and with the facility installation cost by applying the operational period to the second rule, the operational period having been acquired with regard to each of at least the subset of facilities provided in the specific building.
[12] The facility evaluation apparatus according to [8],
   in which the second rule includes at least a subset of second rules that include a rule according to which the evaluation value in accordance with a proportion of the operational period that has been determined with regard to the one facility relative to an average facility lifespan of the one facility, with a facility installation cost required for installation of the one facility, and with a maintenance management cost required for maintenance management of the one facility is determined on the basis of the operational period that has been determined with regard to the one facility, and
   in which the first step includes acquiring the evaluation value in accordance with the proportion of the operational period relative to the average facility lifespan, with the facility installation cost, and with the maintenance management cost by applying the operational period to the second rule, the operational period having been acquired with regard to each of at least the subset of facilities provided in the specific building.
[13] A computer-readable recording medium that records a program including a command which can be executed by a facility evaluation apparatus that evaluates values of facilities provided in buildings,
   the facility evaluation apparatus being capable of making access to one or more storage devices,
   the facility evaluation apparatus being capable of making access to the one or more storage devices,
   the one or more storage devices storing
      service record information about records of one or more maintenance-management services that have been provided to each of one or more facilities among the facilities, the one or more facilities being provided in a specific building among the buildings, and
      evaluation criterion information about evaluation criteria for the values, the evaluation criteria having been set respectively for the facilities in advance,
   the service record information including a service-record information item about one maintenance-management service of the one or more maintenance-management services, the service-record information item including first information about a date on which the one maintenance-management service was provided,
   the evaluation criterion information including an evaluation-criterion information item about one facility of the facilities, the evaluation-criterion information item including a value determination rule according to which an evaluation value that indicates a value of the one facility among the values is determined,
   the service record information including at least a subset of service record information that includes second information about conditions of the facilities, the conditions having been updated through the provision of the one or more maintenance-management services,
   the value determination rule including a subset of value determination rules that include
      a first rule according to which an operational period during which the one facility is estimated to be operational is determined
         on the basis of an at least one of
            a lapse of time since the provision of an at least one maintenance-management service of the one or more maintenance-management services, the at least one maintenance-management service being possible to provide to the one facility,
            the number of times of the provision, and
            a frequency of the provision, and
         on the basis of a condition of the one facility, the condition having been updated through the at least one maintenance-management service that is possible to provide to the one facility, and
      a second rule according to which the evaluation value of the one facility is determined on the basis of the operational period that has been determined with regard to the one facility,
   a process that the facility evaluation apparatus executes in accordance with the command of the program including a first step of acquiring the evaluation value of each of the one or more facilities provided in the specific building by applying the first information included in the service-record information item corresponding to a corresponding one of the one or more maintenance-management services to the value determination rule that is included in the evaluation criterion information,
   the first step including
      acquiring the operational period of each of at least a subset of facilities provided in the specific building among the facilities by applying the first information and the second information that are included in the service record information to the first rule that is included in the evaluation criterion information, and
      acquiring the evaluation value of each of at least the subset of facilities provided in the specific building by applying the acquired operational period to the second rule that is included in the evaluation criterion information.
[14] The computer-readable recording medium according to [13],
   in which the one or more storage devices store part information about parts of the facilities, the parts being possible to replace through part replacement services,
   in which the part information includes availability information that indicates whether or not the parts are available,
   in which the first rule includes at least a subset of first rules that include a rule according to which, in a case where the parts include a part that is indicated to be unavailable by the availability information, an upper limit on the operational period is set in accordance with an average part lifespan of the part and a use-start time of the part, and
   in which the first step includes acquiring, in the case where the parts include the part that is indicated to be unavailable by the availability information included in the part information, the operational period of each of at least the subset of facilities provided in the specific building, the operational period being shorter than the upper limit in accordance with the average part lifespan of the part and the use-start time of the part.
[15] The computer-readable recording medium according to [13],
   in which the second rule includes at least a subset of second rules that include a rule according to which the evaluation value in accordance with a proportion of the operational period that has been determined with regard to the one facility relative to an average facility lifespan of the one facility is determined on the basis of the operational period that has been determined with regard to the one facility, and
   in which the first step includes acquiring the evaluation value in accordance with the proportion of the operational period relative to the average facility lifespan by applying the operational period to the second rule, the operational period having been acquired with regard to each of at least the subset of facilities provided in the specific building.
[16] The computer-readable recording medium according to [13],
   in which the second rule includes at least a subset of second rules that include a rule according to which the evaluation value in accordance with a proportion of the operational period that has been determined with regard to the one facility relative to an average facility lifespan of the one facility and with a facility installation cost required for installation of the one facility is determined on the basis of the operational period that has been determined with regard to the one facility, and
   in which the first step includes acquiring the evaluation value in accordance with the proportion of the operational period relative to the average facility lifespan and with the facility installation cost by applying the operational period to the second rule, the operational period having been acquired with regard to each of at least the subset of facilities provided in the specific building.
[17] The computer-readable recording medium according to [13],
   in which the second rule includes at least a subset of second rules that include a rule according to which the evaluation value in accordance with a proportion of the operational period that has been determined with regard to the one facility relative to an average facility lifespan of the one facility, with a facility installation cost required for installation of the one facility, and with a maintenance management cost required for maintenance management of the one facility is determined on the basis of the operational period that has been determined with regard to the one facility, and
   in which the first step includes acquiring the evaluation value in accordance with the proportion of the operational period relative to the average facility lifespan, with the facility installation cost, and with the maintenance management cost by applying the operational period to the second rule, the operational period having been acquired with regard to each of at least the subset of facilities provided in the specific building.

This application is based on and claims the benefit of priority from Japanese Patent Application No. 2022-122921 filed on August 1, 2022, and the contents of Japanese Patent Application No. 2022-122921 are hereby incorporated by reference.

### Reference Signs List

- 1: facility evaluation apparatus
- 11: communication unit
- 12: storage unit
- 13: processing unit
- 2: database group
- 21: facility management DB
- 22: facility service DB
- 23: part DB
- 24: service record DB
- 25: facility evaluation DB
- 3: user terminal device
- 9: communication network

## Claims

1. A method that a facility evaluation apparatus which evaluates values of facilities provided in buildings carries out,
the facility evaluation apparatus being capable of making access to one or more storage devices,
the one or more storage devices storing
service record information about records of one or more maintenance-management services that have been provided to each of one or more facilities among the facilities, the one or more facilities being provided in a specific building among the buildings, and
evaluation criterion information about evaluation criteria for the values, the evaluation criteria having been set respectively for the facilities in advance,
the service record information including a service-record information item about one maintenance-management service of the one or more maintenance-management services, the service-record information item including first information about a date on which the one maintenance-management service was provided,
the evaluation criterion information including an evaluation-criterion information item about one facility of the facilities, the evaluation-criterion information item including a value determination rule according to which an evaluation value that indicates a value of the one facility among the values is determined,
the service record information including at least a subset of service record information that includes second information about conditions of the facilities, the conditions having been updated through the provision of the one or more maintenance-management services,
the value determination rule including a subset of value determination rules that include
a first rule according to which an operational period during which the one facility is estimated to be operational is determined
on a basis of an at least one of
a lapse of time since the provision of an at least one maintenance-management service of the one or more maintenance-management services, the at least one maintenance-management service being possible to provide to the one facility,
the number of times of the provision, and
a frequency of the provision, and
on a basis of a condition of the one facility, the condition having been updated through the at least one maintenance-management service that is possible to provide to the one facility, and
a second rule according to which the evaluation value of the one facility is determined on a basis of the operational period that has been determined with regard to the one facility,
the method including a first step of acquiring, by the facility evaluation apparatus, the evaluation value of each of the one or more facilities provided in the specific building by applying the first information included in the service-record information item corresponding to a corresponding one of the one or more maintenance-management services to the value determination rule that is included in the evaluation criterion information,
the first step including
acquiring the operational period of each of at least a subset of facilities provided in the specific building among the facilities by applying the first information and the second information that are included in the service record information to the first rule that is included in the evaluation criterion information, and
acquiring the evaluation value of each of at least the subset of facilities provided in the specific building by applying the acquired operational period to the second rule that is included in the evaluation criterion information,
the one or more storage devices storing part information about parts of the facilities, the parts being possible to replace through part replacement services,
the part information including availability information that indicates whether or not the parts are available,
the first rule including at least a subset of first rules that include a rule according to which, in a case where the parts include a part that is indicated to be unavailable by the availability information, an upper limit on the operational period is set in accordance with an average part lifespan of the part and a use-start time of the part,
the first step including acquiring, in the case where the parts include the part that is indicated to be unavailable by the availability information included in the part information, the operational period of each of at least the subset of facilities provided in the specific building, the operational period being shorter than the upper limit in accordance with the average part lifespan of the part and the use-start time of the part.

2. A method that a facility evaluation apparatus which evaluates values of facilities provided in buildings carries out,
the facility evaluation apparatus being capable of making access to one or more storage devices,
the one or more storage devices storing
service record information about records of one or more maintenance-management services that have been provided to each of one or more facilities among the facilities, the one or more facilities being provided in a specific building among the buildings, and
evaluation criterion information about evaluation criteria for the values, the evaluation criteria having been set respectively for the facilities in advance,
the service record information including a service-record information item about one maintenance-management service of the one or more maintenance-management services, the service-record information item including first information about a date on which the one maintenance-management service was provided,
the evaluation criterion information including an evaluation-criterion information item about one facility of the facilities, the evaluation-criterion information item including a value determination rule according to which an evaluation value that indicates a value of the one facility among the values is determined,
the service record information including at least a subset of service record information that includes second information about conditions of the facilities, the conditions having been updated through the provision of the one or more maintenance-management services,
the value determination rule including a subset of value determination rules that include
a first rule according to which an operational period during which the one facility is estimated to be operational is determined
on a basis of an at least one of
a lapse of time since the provision of an at least one maintenance-management service of the one or more maintenance-management services, the at least one maintenance-management service being possible to provide to the one facility,
the number of times of the provision, and
a frequency of the provision, and
on a basis of a condition of the one facility, the condition having been updated through the at least one maintenance-management service that is possible to provide to the one facility, and
a second rule according to which the evaluation value of the one facility is determined on a basis of the operational period that has been determined with regard to the one facility,
the method including a first step of acquiring, by the facility evaluation apparatus, the evaluation value of each of the one or more facilities provided in the specific building by applying the first information included in the service-record information item corresponding to a corresponding one of the one or more maintenance-management services to the value determination rule that is included in the evaluation criterion information,
the first step including
acquiring the operational period of each of at least a subset of facilities provided in the specific building among the facilities by applying the first information and the second information that are included in the service record information to the first rule that is included in the evaluation criterion information, and
acquiring the evaluation value of each of at least the subset of facilities provided in the specific building by applying the acquired operational period to the second rule that is included in the evaluation criterion information,
the second rule including at least a subset of second rules that include a rule according to which the evaluation value in accordance with a proportion of the operational period that has been determined with regard to the one facility relative to an average facility lifespan of the one facility is determined on the basis of the operational period that has been determined with regard to the one facility,
the first step including acquiring the evaluation value in accordance with the proportion of the operational period relative to the average facility lifespan by applying the operational period to the second rule, the operational period having been acquired with regard to each of at least the subset of facilities provided in the specific building.

3. A method that a facility evaluation apparatus which evaluates values of facilities provided in buildings carries out,
the facility evaluation apparatus being capable of making access to one or more storage devices,
the one or more storage devices storing
service record information about records of one or more maintenance-management services that have been provided to each of one or more facilities among the facilities, the one or more facilities being provided in a specific building among the buildings, and
evaluation criterion information about evaluation criteria for the values, the evaluation criteria having been set respectively for the facilities in advance,
the service record information including a service-record information item about one maintenance-management service of the one or more maintenance-management services, the service-record information item including first information about a date on which the one maintenance-management service was provided,
the evaluation criterion information including an evaluation-criterion information item about one facility of the facilities, the evaluation-criterion information item including a value determination rule according to which an evaluation value that indicates a value of the one facility among the values is determined,
the service record information including at least a subset of service record information that includes second information about conditions of the facilities, the conditions having been updated through the provision of the one or more maintenance-management services,
the value determination rule including a subset of value determination rules that include
a first rule according to which an operational period during which the one facility is estimated to be operational is determined
on a basis of an at least one of
a lapse of time since the provision of an at least one maintenance-management service of the one or more maintenance-management services, the at least one maintenance-management service being possible to provide to the one facility,
the number of times of the provision, and
a frequency of the provision, and
on a basis of a condition of the one facility, the condition having been updated through the at least one maintenance-management service that is possible to provide to the one facility, and
a second rule according to which the evaluation value of the one facility is determined on a basis of the operational period that has been determined with regard to the one facility,
the method including a first step of acquiring, by the facility evaluation apparatus, the evaluation value of each of the one or more facilities provided in the specific building by applying the first information included in the service-record information item corresponding to a corresponding one of the one or more maintenance-management services to the value determination rule that is included in the evaluation criterion information,
the first step including
acquiring the operational period of each of at least a subset of facilities provided in the specific building among the facilities by applying the first information and the second information that are included in the service record information to the first rule that is included in the evaluation criterion information, and
acquiring the evaluation value of each of at least the subset of facilities provided in the specific building by applying the acquired operational period to the second rule that is included in the evaluation criterion information,
the second rule including at least a subset of second rules that include a rule according to which the evaluation value in accordance with a proportion of the operational period that has been determined with regard to the one facility relative to an average facility lifespan of the one facility and with a facility installation cost required for installation of the one facility is determined on the basis of the operational period that has been determined with regard to the one facility,
the first step including acquiring the evaluation value in accordance with the proportion of the operational period relative to the average facility lifespan and with the facility installation cost by applying the operational period to the second rule, the operational period having been acquired with regard to each of at least the subset of facilities provided in the specific building.

4. A method that a facility evaluation apparatus which evaluates values of facilities provided in buildings carries out,
the facility evaluation apparatus being capable of making access to one or more storage devices,
the one or more storage devices storing
service record information about records of one or more maintenance-management services that have been provided to each of one or more facilities among the facilities, the one or more facilities being provided in a specific building among the buildings, and
evaluation criterion information about evaluation criteria for the values, the evaluation criteria having been set respectively for the facilities in advance,
the service record information including a service-record information item about one maintenance-management service of the one or more maintenance-management services, the service-record information item including first information about a date on which the one maintenance-management service was provided,
the evaluation criterion information including an evaluation-criterion information item about one facility of the facilities, the evaluation-criterion information item including a value determination rule according to which an evaluation value that indicates a value of the one facility among the values is determined,
the service record information including at least a subset of service record information that includes second information about conditions of the facilities, the conditions having been updated through the provision of the one or more maintenance-management services,
the value determination rule including a subset of value determination rules that include
a first rule according to which an operational period during which the one facility is estimated to be operational is determined
on a basis of an at least one of
a lapse of time since the provision of an at least one maintenance-management service of the one or more maintenance-management services, the at least one maintenance-management service being possible to provide to the one facility,
the number of times of the provision, and
a frequency of the provision, and
on a basis of a condition of the one facility, the condition having been updated through the at least one maintenance-management service that is possible to provide to the one facility, and
a second rule according to which the evaluation value of the one facility is determined on a basis of the operational period that has been determined with regard to the one facility,
the method including a first step of acquiring, by the facility evaluation apparatus, the evaluation value of each of the one or more facilities provided in the specific building by applying the first information included in the service-record information item corresponding to a corresponding one of the one or more maintenance-management services to the value determination rule that is included in the evaluation criterion information,
the first step including
acquiring the operational period of each of at least a subset of facilities provided in the specific building among the facilities by applying the first information and the second information that are included in the service record information to the first rule that is included in the evaluation criterion information, and
acquiring the evaluation value of each of at least the subset of facilities provided in the specific building by applying the acquired operational period to the second rule that is included in the evaluation criterion information,
the second rule including at least a subset of second rules that include a rule according to which the evaluation value in accordance with a proportion of the operational period that has been determined with regard to the one facility relative to an average facility lifespan of the one facility, with a facility installation cost required for installation of the one facility, and with a maintenance management cost required for maintenance management of the one facility is determined on the basis of the operational period that has been determined with regard to the one facility,
the first step including acquiring the evaluation value in accordance with the proportion of the operational period relative to the average facility lifespan, with the facility installation cost, and with the maintenance management cost by applying the operational period to the second rule, the operational period having been acquired with regard to each of at least the subset of facilities provided in the specific building.

5. The method according to any one of Claim 1 to Claim 4,
wherein the second information includes at least a subset of second information that is any of
deterioration degree information that indicates deterioration degrees of the facilities, the deterioration degrees having been revealed through inspection services,
repair information about details of repairs that have been made to the facilities through repair services, and
replaced part information about parts of the facilities, the parts having been replaced through part replacement services,
wherein the first rule includes at least a subset of first rules that include an at least one of
a rule according to which, in accordance with the deterioration degree information, the operational period is set to be shorter as a corresponding one of the deterioration degrees of a corresponding one of the facilities becomes higher,
a rule according to which, in accordance with the repair information, the operational period is set to be shorter as the number of times of the repairs becomes smaller and/or as the number of elapsed days since a latest repair becomes larger, and
a rule according to which, in accordance with the replaced part information, the operational period is set to be shorter as the number of times of the part replacement becomes smaller and/or as the number of elapsed days since latest part replacement becomes larger, and
wherein the first step includes an at least one of
acquiring the operational period of each of at least the subset of facilities provided in the specific building, the operational period becoming shorter as a corresponding one of the deterioration degrees becomes higher, by applying the deterioration degree information and the first information that are included in the service record information to the first rule that is included in the evaluation criterion information,
acquiring the operational period of each of at least the subset of facilities provided in the specific building, the operational period becoming shorter as the number of times of the repairs becomes smaller and/or as the number of the elapsed days since the latest repair becomes larger, by applying the repair information and the first information that are included in the service record information to the first rule that is included in the evaluation criterion information, and
acquiring the operational period of each of at least the subset of facilities provided in the specific building, the operational period becoming shorter as the number of times of the part replacement becomes smaller and/or as the number of the elapsed days since the latest part replacement becomes larger, by applying the replaced part information and the first information that are included in the service record information to the first rule that is included in the evaluation criterion information.

6. The method according to any one of Claim 1 to Claim 4, further comprising
a second step of acquiring a comprehensive evaluation value that indicates the values of all the one or more facilities provided in the specific building on a basis of the evaluation value acquired with regard to each of the one or more facilities provided in the specific building.

7. A facility evaluation apparatus that evaluates values of facilities provided in buildings, the facility evaluation apparatus comprising:
a processing unit; and
a storage unit that stores a command which the processing unit executes,
the processing unit being capable of making access to one or more storage devices,
the one or more storage devices storing
service record information about records of one or more maintenance-management services that have been provided to each of one or more facilities among the facilities, the one or more facilities being provided in a specific building among the buildings, and
evaluation criterion information about evaluation criteria for the values, the evaluation criteria having been set respectively for the facilities in advance,
the service record information including a service-record information item about one maintenance-management service of the one or more maintenance-management services, the service-record information item including first information about a date on which the one maintenance-management service was provided,
the evaluation criterion information including an evaluation-criterion information item about one facility of the facilities, the evaluation-criterion information item including a value determination rule according to which an evaluation value that indicates a value of the one facility among the values is determined,
the service record information including at least a subset of service record information that includes second information about conditions of the facilities, the conditions having been updated through the provision of the one or more maintenance-management services,
the value determination rule including a subset of value determination rules that include
a first rule according to which an operational period during which the one facility is estimated to be operational is determined
on a basis of an at least one of
a lapse of time since the provision of an at least one maintenance-management service of the one or more maintenance-management services, the at least one maintenance-management service being possible to provide to the one facility,
the number of times of the provision, and
a frequency of the provision, and
on a basis of a condition of the one facility, the condition having been updated through the at least one maintenance-management service that is possible to provide to the one facility, and
a second rule according to which the evaluation value of the one facility is determined on a basis of the operational period that has been determined with regard to the one facility,
a process that the processing unit executes in accordance with the command including the first step by the method according to any one of Claim 1 to Claim 4.

8. A computer-readable recording medium that records a program including a command which can be executed by a facility evaluation apparatus that evaluates values of facilities provided in buildings,
the facility evaluation apparatus being capable of making access to one or more storage devices,
the one or more storage devices storing
service record information about records of one or more maintenance-management services that have been provided to each of one or more facilities among the facilities, the one or more facilities being provided in a specific building among the buildings, and
evaluation criterion information about evaluation criteria for the values, the evaluation criteria having been set respectively for the facilities in advance,
the service record information including a service-record information item about one maintenance-management service of the one or more maintenance-management services, the service-record information item including first information about a date on which the one maintenance-management service was provided,
the evaluation criterion information including an evaluation-criterion information item about one facility of the facilities, the evaluation-criterion information item including a value determination rule according to which an evaluation value that indicates a value of the one facility among the values is determined,
the service record information including at least a subset of service record information that includes second information about conditions of the facilities, the conditions having been updated through the provision of the one or more maintenance-management services,
the value determination rule including a subset of value determination rules that include
a first rule according to which an operational period during which the one facility is estimated to be operational is determined
on a basis of an at least one of
a lapse of time since the provision of an at least one maintenance-management service of the one or more maintenance-management services, the at least one maintenance-management service being possible to provide to the one facility,
the number of times of the provision, and
a frequency of the provision, and
on a basis of a condition of the one facility, the condition having been updated through the at least one maintenance-management service that is possible to provide to the one facility, and
a second rule according to which the evaluation value of the one facility is determined on a basis of the operational period that has been determined with regard to the one facility,
a process that the facility evaluation apparatus executes in accordance with the command of the program including the first step by the method according to any one of Claim 1 to Claim 4.
